# EUROPÄISCHE PATENTSCHRIFT

(11) **EP 1 992 799 B1**
(45) Veröffentlichungstag und Bekanntmachung des Hinweises auf die Patenterteilung: **13.07.2011**
(21) Anmeldenummer: 08155580.7
(22) Anmeldetag: 02.05.2008
(51) Int. Cl.: F01N 3/08, B01D 53/00, B01D 5/00, F25J 3/06, B60K 15/04, B60S 5/02, F01N 3/00, F01N 3/04

(54) **System zur Rückgewinnung und Rückführung von CO2**
System for recovery and refeeding of CO2
Système de récupération et de retour de CO2

(30) Priorität: 03.05.2007 DE 102007021081
(43) Veröffentlichungstag der Anmeldung: 19.11.2008
(73) Patentinhaber: Stadtwerke Mainz AG, 55118 Mainz (DE)
(72) Erfinder: Flohr, Dipl.-Ing., Peter, 55128, Mainz (DE)
(74) Vertreter: Graf Glück Habersack Kritzenberger

(56) Entgegenhaltungen:
- DE-A1- 3 702 456
- FR-A1- 2 875 265
- GB-A- 2 402 633
- US-A- 2 966 036
- US-A- 3 968 649

## Beschreibung

Die vorliegende Erfindung betrifft ein System zur CO₂-Rückgewinnung in Kraftfahrzeugen, die über eine Einrichtung zur CO₂-Rückgewinnung verfügen, sowie ein Verfahren zur Rückgewinnung von CO₂ in Kraftfahrzeugen. Die Erfindung betrifft ferner ein Verfahren zur Rückführung des gewonnen CO₂ in Speichermedien oder in einen Prozess, bei dem CO₂ benötigt wird.

Die US 2,966,036 zeigt ein System für die Zurückführung des CO₂ aus Abgasen, bei welchem das während der Verbrennung in dem Verbrennungsmotor des Kraftfahrzeugs anfallende CO₂ verflüssigt und in einem Speichertank gespeichert wird. Gemäß dem Dokument kann der Druckbehälter in ungleichmäßigen Intervallen an einer Servicestation geleert werden, indem ein Entleerungsventil geöffnet wird.

Derzeit verfügen markttaugliche Kraftfahrzeuge über Katalysatoren zur Reduzierung des Kohlenmonoxid- und Stickoxidgehalts in Abgasen von Verbrennungsmotoren. Was durch die Katalysatoren weitgehend unbeeinflusst bleibt ist der Kohlendioxidausstoß der Verbrennungsmotoren, der in erster Linie abhängt von der Größe und dem Wirkungsgrad der Motoren. Bei Verbrennungskraftmaschinen, die in einem nach außen dicht abgeschlossenen Raum betrieben werden, wie zum Beispiel bei Taucherglocken, ist man im Stand der Technik zur Rückgewinnung von CO₂ u.a. bestrebt, dieses Gas zu verflüssigen und ggf. zusammen mit Sauerstoff in den Verbrennungsprozess zurück zuführen.

Es ist daher Aufgabe der Erfindung, eine praxistaugliche Einrichtung und ein diesbezügliches Verfahren zu schaffen, die es erlauben, den CO₂-Gehalt in dem Auspuffgas von Verbrennungsmotoren zu reduzieren.

Diese Aufgabe wird erfindungsgemäß gelöst durch ein System zur CO₂-Rückgewinnung in Kraftfahrzeugen gemäß Anspruch 1 und ein Verfahren zur Rückgewinnung von CO₂ in Kraftfahrzeugen gemäß Anspruch 4.

Erfindungsgemäß ist das System für Kraftfahrzeuge mit einer CO₂-Verflüssigungsanlage vorgesehen, welche den im Abgas enthaltenen CO₂-Anteil verflüssigt und in einem Druckbehälter des Kraftfahrzeugs lagert. Der Druckbehälter ist über eine Verbindungseinrichtung, vorzugsweise einen Druckverbindungsflansch mit externen Lager- oder Aufbereitungsstätten verbindbar, die z.B. an Tankstellen vorgesehen sein können. Hier setzt das erfindungsgemäße Rückführverfahren für CO₂ ein, gemäß dem der im Kraftfahrzeug angesammelte CO₂-Anteil dem Fahrzeug entnommen und tankstellenseitig abgeführt und dort zwischengelagert wird.

Als CO₂-Verflüssigungsanlage kann jede Verflüssigungsanlage verwendet werden, die nach dem Stand der Technik bekannt ist, und die für einen Einbau in ein Kraftfahrzeug kompakt genug ist. Derartige Verflüssigungsanlagen sind aus beispielsweise Kühlschrankkompressoren bekannt.

Vorzugsweise ist im Abgasrohr des Verbrennungsmotors ein Kompressor angeordnet, welchem ein Kühlelement nachgeordnet ist. Der Kompressor erhöht den Druck in einem nachgeordneten Druckbereich auf zwischen 5 und 30 bar, vorzugsweise zwischen 15 und 20 bar. In dem Druckbereich ist ein Kühlkörper mit einer sehr großen Oberfläche vorgesehen. Dieser Kühlkörper kühlt das im Druckbereich einströmende Gas auf eine Temperatur zwischen -20 und -60° C, vorzugsweise zwischen -40 und -50° C ab, so dass das im Druckbereich vorhandene CO₂ verflüssigt wird. Prinzipiell könnte das flüssige CO₂ direkt aus diesem Druckbereich abgeführt werden. Für eine problemlose Handhabung des kontinuierlichen Prozesses ist es jedoch besser, wenn der Druckbereich, vorzugsweise über ein Einwegventil mit einem Druckbehälter verbunden ist, in welchem das flüssige CO₂ einfließt. Der Druckbehälter ist vorzugsweise wärmegedämmt. Durch den separaten Druckbehälter kann der Druckbereich mit den Kühlflächen des Kühlkörpers frei gehalten werden für das einströmende Gas, wodurch die kontinuierliche Weiterführung des Prozesses nicht gestört wird. Das Einwegeventil verhindert ein Rückfließen oder Verdampfen des flüssigen CO₂ in den Druckbereich, auch wenn der Druck dort nachlässt, z.B. mit dem Abstellen des Motors. Dem Druckbereich ist in dem Strömungsverlauf des Abgases ein Druckventil nachgeordnet, durch welches das CO₂ gereinigte Abgas weiter in den Endbereich der Auspuffanlage strömt. Vorzugsweise kann dem Druckventil ein Wärmekörper nachgeordnet sein, welcher das stark abgekühlte Gas wieder auf normale Temperaturen hoch heizt. Der Kühlkörper des Druckbereichs als auch der Wärmekörper nach dem Druckventil können vorzugsweise über einen Wärmetauscherkreislauf miteinander verbunden sein, wodurch eine Art Wärmerückgewinnung möglich ist. Der Wärmetauscherkreislauf wendet vorzugsweise das Lindeverfahren an.

Die Erfindung nutzt Tankstellen, um das flüssige CO₂ aus dem Druckbehälter der Kraftfahrzeuge zu entleeren, weil diese schon flächendeckend vorgesehen sind. Zudem kann die CO₂-Entsorgung mit dem Tankvorgang erfolgen, der in die Zapfpistolen der Betankungsanlagen auch ein Druckverbindungsanschluss integriert ist, der nicht nur den Kraftstofftank des Kraftfahrzeugs betankt, sondern gleichzeitig den Druckbehälter des Kraftfahrzeugs entleert. Vorzugsweise ist die Zapfpistole nach Art eines Bajonettverschlusses ausgebildet, der eine sichere Druckverbindung zwischen dem Druckbehälter des Kraftfahrzeuges und dem entsprechenden Druckbehälter der Tankstelle ermöglicht und gleichzeitig eine Verbindung zwischen der Kraftstofffüllleitung der Zapfsäule mit dem Tankstutzen des Kraftfahrzeugs herstellt.

Die Verflüssigung des CO₂ findet bei Temperaturen zwischen -20 bis -60° C, vorzugsweise zwischen -40 und -50° C statt und bei Druck zwischen 5 und 40 bar, vorzugsweise zwischen 15 und 20 bar.

Durch die Erfindung ist es möglich, das im Abgas vorhandene CO₂ weitestgehend aus dem Kreislauf zu entfernen und über die zentralen Druckbehälter der Tankstellen einer zentralen Rückführung in industrielle Kreisläufe zugänglich zu machen. Auf diese Weise kann dem Bedarf nach einer umweltschonenderen Mobilität im Verkehrssystem Rechnung getragen werden. Erfindungsgemäß umfasst der Rückführkreislauf des CO₂ optional auch die Weitergabe des tankstellenseitig zwischengelagerten Gases in industrielle Verarbeitungsprozesse, bei denen CO₂ benötigt wird. Ebenso ist es möglich, Frachtschiffe mit Überführmitteln für verflüssigtes CO₂ zu versehen, sodass diese beispielsweise anstelle einer ladungsfreien Fahrt CO₂ aufnehmen und als Fracht aufnehmen können.

Die Erfindung wird nachfolgend beispielsweise anhand der schematischen Zeichnung beschrieben. Diese zeigt in sehr schematischer Form eine Anlage zur CO₂-Verflüssigung in dem Abgassystem eines Kraftfahrzeugs.

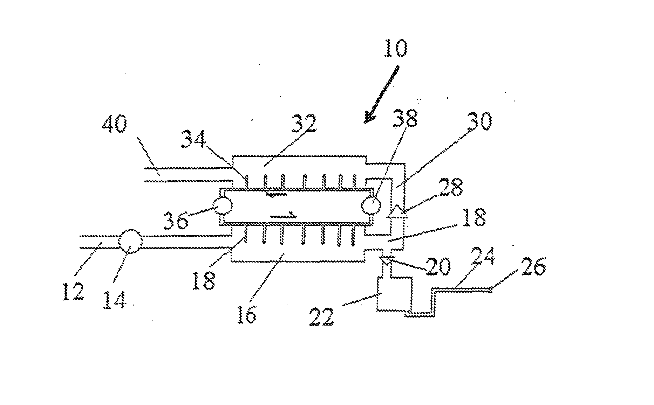

Die Figur zeigt eine CO₂-Verflüssigungsanlage 10, die in der Abgasleitung 12 eines Kraftfahrzeugs nachfolgend dem Katalysator eingebaut ist. Der vorteilhafte Einbau hinter dem Katalysator sorgt dafür, dass der Gehalt an Stickoxiden und Kohlenmonoxid weitgehend reduziert ist, so dass bei der Verflüssigung relativ reines CO₂ erhalten wird. Die Verflüssigungsanlage 10 kann jedoch auch vor dem Katalysator in das Abgassystem eingebaut sein.

Die Verflüssigungsanlage 10 enthält einen Kompressor 14, der die Abgase aus dem Verbrennungsmotor auf einen Druck zwischen 5 und 40 bar, vorzugsweise zwischen 10 und 20 bar komprimiert. In dem dem Kompressor nachgeordneten Druckbereich 16 sind eine Vielzahl von Kühllamellen 18 angeordnet, die den Druckbereich 16 großflächig durchsetzen und das einströmende Gas zum Ende des Druckbereichs hin auf eine Temperatur zwischen -20 und -60° C, vorzugsweise zwischen -40 und -50° C herunterkühlen. Am Ende des Druckbereichs 16 befindet sich eine Gasableitung 18 für das verflüssigte CO₂ und andere nicht verflüssigte Abgase, wobei das verflüssigte CO₂ über ein Einwegventil 20 nach unten in einen Druckbehälter 22 abfließt. Der Druckbehälter 22 ist über eine Druckleitung 24 mit einem Druckverbindungsflansch 26 verbunden, mittels dem es möglich ist, das in dem Druckbehälter 22 befindliche flüssige CO₂ in einen externen Tank, z.B. an einer Tankstelle zu überführen. Die Einmündung der Druckleitung 24 in den Druckbehälter 22 befindet sich vorzugsweise am unteren Ende der Wand oder im Bodenbereich des Druckbehälters 22, um somit eine vollständige Entleerung des Kfz-Druckbehälters 22 in einen externen Druckbehälter zu ermöglichen. Die nicht verflüchtigten Gase, insbesondere Stickstoff, entweichen über ein Druckventil 28 in eine Gasabfuhrleitung 30, die in einen Aufheizbereich 32 mündet, in welchem ein Wärmeelement 34, in der Art des Kühlelements 18 im Druckbereich 16 angeordnet ist. Das Wärmelement 34 und das Kühlelement 18 sind vorzugsweise die beiden Wärmetauscherelemente eines Wärmetauscherkreislaufs, der neben diesen Elementen 18 und 34 noch einen Verdampfer 36 und einen Kompressor 38 aufweist. Die Fließrichtung des Kühlmediums in dem durch den Verdampfer 36, den Kompressor 38 und die beiden Wärmetauscherelemente 18 und 34 gebildeten Kühlkreislauf ist durch Pfeile gekennzeichnet. Verwendet wird in dem Wärmetauscherkreislauf ein geeignetes Kühlfluid, das in der Lage ist, über die Kühlwirkung des Kühlelements 18 die geforderten Temperaturen von -30 bis -50° C im Druckbereich 16 zu erzielen.

Das mittels des Wärmelements 34 wieder auf Normaltemperatur aufgeheizte Abgas wird dann gereinigt dem End-Auspuffsystem 40 des Kraftfahrzeugs zugeleitet.

Die Anwendung der Erfindung ist selbstverständlich nicht nur auf den Straßenverkehr beschränkt, sondern kann auch in Schiffen und mobilen Elektrizitätskraftwerken mit Verbrennungsmotoren Verwendung finden.

## Patentansprüche

1. System zur CO₂-Rückgewinnung umfassend:
Kraftfahrzeuge mit einem Verbrennungsmotor, in welchen in der Abgasleitung eine CO₂-Verflüssigungseinrichtung (10) angeordnet ist, die einen Druckbehälter (22) für flüssiges CO₂ aufweist, welche Kraftfahrzeuge ferner einen Kraftstofftank mit einem Tankstutzen aufweisen, **dadurch gekennzeichnet, dass**
- Tankstellen vorgesehen sind, die Zapfsäulen als auch Druckbehälter zur Aufnahme des CO₂ aus dem fahrzeugseitigen Druckbehälter (22) aufweisen,
- die Kraftfahrzeuge und die Zapfsäulen zueinander komplementäre Druckverbindungsflansche zur Verbindung des fahrzeugseitigen Druckbehälters mit dem tankstellenseitigen Druckbehälter aufweisen, und
- der Druckverbindungsflansch mit dem Tankstutzen für den Kraftstofftank integriert ist.

2. System nach Anspruch 1, **dadurch gekennzeichnet, dass** der Druckverbindungsflansch einen Bajonettverschluss aufweist.

3. System nach einem der vorherigen Ansprüche, **dadurch gekennzeichnet, dass** zwischen der tankstellenseitigen Druckverbindung und der tankstellenseitigen Speichereinrichtung ein Volumenzähler angeordnet ist.

4. Verfahren zur Rückgewinnung von CO₂ in Kraftfahrzeugen, **dadurch gekennzeichnet, dass** das CO₂ in den Kraftfahrzeugen in fahrzeugseitigen Anlagen verflüssigt und in Druckbehältern gespeichert wird, dass tankstellenseitige Speichereinrichtungen zur Aufnahme und Speicherung des in den Kraftfahrzeugen gespeicherten flüssigen CO₂ vorgesehen werden, wobei das flüssige CO₂ von den kraftfahrzeugseitigen Behältern in die tankstellenseitigen Behälter im Rahmen eines Tankvorgangs über geeignete Druckverbindungen übertragen werden, die in den Tankstutzen integriert sind.

5. Verfahren nach Anspruch 4, **dadurch gekennzeichnet, dass** die Kältegewinnung für das Herunterkühlen des CO₂-haltigen Abgases über einen Wärmetauscher mit der Wärmegewinnung für das Aufheizen des CO₂-gereinigten Abgases gekoppelt wird.

## Claims

1. A system for recovering CO₂ comprising:
motor vehicles with an internal combustion engine including a CO₂ liquifier (10) arranged in the exhaust pipe and including a vehicular pressure tank (22) for liquid carbon-dioxide, said motor vehicles comprising furthermore a fuel tank with a filler neck, **characterized in that**
- filling stations are provided comprising pumps as well as pressure tanks for tanking CO₂ from the vehicular pressure tank (22),
- complementary vehicular and pump pressure connecting flanges for connecting the vehicular pressure tank to the station pressure tank, and
- said pressure connecting flange is integrated in said fuel tank filler neck.

2. The system as set forth in claim 1, **characterized in that** said pressure connecting flange comprises a bayonet lock.

3. The system as set forth in any of the preceding claims, **characterized in that** disposed between said station pressure connection and said station tanking means is a flowmeter.

4. A method for recovering CO₂ in motor vehicles **characterized in that** CO₂ is liquified in the motor vehicles in vehicular systems and tanked in pressure tanks, that station tanking means are provided for tanking the liquified CO₂ tanked in the motor vehicles, said liquified CO₂ being transferred from the vehicular tanks into the station tanks during tanking via suitable pressure connections integrated in the filler necks.

5. The method as set forth in claim 4, **characterized in that** the chiller for chilling the exhaust gas CO₂ is coupled by a heat exchanger to a heater for heating the exhaust gas purged of CO₂.

## Revendications

1. Système de récupération de CO₂ comprenant :
- des véhicules automobiles dotés d'un moteur à combustion, dans lequel un dispositif de liquéfaction du CO₂ (10), qui présente un récipient sous pression (22) pour du CO₂ liquide, est disposé dans le conduit de gaz d'échappement, les véhicules automobiles présentant en outre un réservoir à carburant avec une tubulure de remplissage de réservoir, **caractérisé par le fait que**
- des stations-services sont prévues, qui présentent des distributeurs de carburant ainsi que des récipients sous pression destinés à recueillir le CO₂ provenant du récipient sous pression côté véhicule (22),
- les véhicules automobiles et les distributeurs de carburant présentent des brides de liaison de pression complémentaires entre elles destinées à la liaison du récipient sous pression côté véhicule avec le récipient sous pression côté station-service, et
- la bride de liaison de pression est intégrée avec la tubulure de remplissage de réservoir pour le réservoir de carburant.

2. Système selon la revendication 1, **caractérisé par le fait que** la bride de liaison de pression présente une fermeture à baïonnette.

3. Système selon l'une des revendications précédentes, **caractérisé par le fait qu'**un compteur volumétrique est disposé entre la liaison de pression côté station-service et le dispositif de stockage.

4. Procédé de récupération de CO₂ dans des véhicules automobiles, **caractérisé par le fait que**
- le CO₂ est fluidifié dans les véhicules automobiles dans des installations situées sur le véhicule et est stocké dans des réservoirs sous pression,
- des dispositifs de stockage côté station-service sont prévus pour recueillir et stocker du CO₂ fluide stocké dans les véhicules automobiles, le CO₂ fluide étant transmis des récipients côté véhicule automobile vers les récipients côté station-service dans le cadre d'un procédé de délivrance de carburant par l'intermédiaire de liaisons de pression adaptées, qui sont intégrées dans les tubulures de remplissage de réservoir.

5. Procédé selon la revendication 4, **caractérisé par le fait que** la récupération de froid pour le refroidissement du gaz d'échappement contenant du CO₂ par l'intermédiaire d'un échangeur thermique est couplée avec la récupération de chaleur pour le réchauffement du gaz d'échappement purifié de CO₂.
